(19) Europäisches Patentamt
European Patent Office
Office européen des brevets

(11) Publication number: 0 305 933 A2

(12) # EUROPEAN PATENT APPLICATION

(21) Application number: 88114003.2

(51) Int. Cl.[4]: C08G 61/08

(22) Date of filing: 27.08.88

(30) Priority: 31.08.87 JP 215214/87
01.06.88 JP 132603/88

(43) Date of publication of application:
08.03.89 Bulletin 89/10

(84) Designated Contracting States:
AT BE CH DE ES FR GB IT LI NL SE

(71) Applicant: TEIJIN LIMITED
11 Minamihonmachi 1-chome Higashi-ku
Osaka-shi Osaka 541(JP)

(72) Inventor: Hara, Shigeyoshi
3-1-3, Yamatemachi
Iwakuni-shi Yamaguchi-ken(JP)
Inventor: Endo, Zen-ichiro
1-28-7, Ozumachi
Iwakuni-shi Yamaguchi-ken(JP)

(74) Representative: Türk, Gille, Hrabal
Bruckner Strasse 20
D-4000 Düsseldorf 13(DE)

(54) **Process for producing a molded article of metathesis polymerized polymer.**

(57) A process for producing a cross-linked molded article by metathesis polymerizing in a mold a mixture comprising metathesis polymerizable monomers such as dicyclopentadiene and polymers having norbornene-group in the structure, the molded article and a polymerizable composition therefor.

EP 0 305 933 A2

# PROCESS FOR PRODUCING A MOLDED ARTICLE OF METATHESIS POLYMERIZED POLYMER

## Field of the Invention

This invention relates to a process for producing a molded article of a metathesis polymerized cross-linked polymer, the molded article and a multi-part metathesis polymerizable composition used for producing the molded article.

## Background of the Invention

U.S. Patent 4,400,340 and U.S. Patent 4,426,502 disclose the production of a molded article by injecting a reactive liquid mixture comprising norbornene-type monomers such as dicyclopentadiene and a metathesis polymerization catalyst system into a mold in which said liquid mixture is metathesis polymerized in bulk (called "RIM process" hereinafter). RIM process is a low pressure one-step or one-shot injection process and the liquid mixture injected into the mold polymerizes rapidly to form a molded article. Thus, there are easily produced large-sized molded articles from norbornene-type monomers such as dicyclopentadiene by RIM process.

The molded articles produced from norbornene-type monomers by said RIM process, however, often lack impact strength and heat resistance.

U.S. Patent 4,418,178 and U.S. Patent 4,418,179 disclose metathesis-polymerizing the norbornene-type monomers in the presence of an impact modifier selected from polyolefin powders, polyvinylidene fluoride powders and a rubbery material to improve the impact properties of the metathesis polymerized polymers. The use of the impact modifiers as disclosed in said U.S. Patent 4,418,178 and U.S. Patent 4,418,179, however, often drops softening temperature of the metathesis polymerized polymers and results in the reduction of heat resistance of the metathesis polymerized polymers.

Further, it is proposed to add plasticizers into a metathesis polymerizable mixture containing a norbornene-type monomer. But, the use of plasticizers provides the metathesis polymerized polymer with the troubles of a big drop in softening temperature of the polymer and the blooming of the plasticizers from the polymer.

Japanese Laid Open Sho 61-179214 and U.S. Patent 4,701,510 (i.e. U.S. counterpart of Japanese Laid Open Sho 62-187715 laid open to public on August 17, 1987) disclose the metathesis polymerization of a metathesis polymerizable norbornene-type cycloolefin in the presence of a polyfunctional cycloolefin cross-linker containing two or more norbornene-groups in the structure to produce a metathesis polymerized cross-linked polymer having increased softening temperature and increased solvent resistance. But, the use of such cross-linkers as disclosed in Japanese Laid Open Sho 61-179214 and U.S. Patent 4,701,501 frequently reduces impact strength of the metathesis polymerized cycloolefin polymers.

Now, we have found that polymers having at least one norbornene-group in the structure can be metathesis polymerized with norbornene-type monomers. Further, we have found that there are produced metathesis polymerized polymers and molded articles having attractive properties as balanced in heat resistance and impact strength by the addition of the polymers having norbornene-group into a reactive mixture containing the metathesis polymerizable monomers.

Moreover, we have found that the use of the polymers having norbornene-group can provide the cross-linked metathesis polymerized polymers and molded articles with a variety of attractive properties depending on the characteristics of the polymers having norbornene-group used.

Therefore, it is an object of the present invention to provide a process for producing molded articles of metathesis polymerized polymers having a high softening point and an increased impact strength.

A further object of the present invention is to provide the molded articles.

Another object of the present invention is to provide a multi-part metathesis polymerizable composition used for the production of the molded articles.

Another object is to provide molded articles having other attractive properties.

## Summary of the Invention

The present invention relates to a process for producing a molded article by introducing a reactive liquid mixture comprising metathesis polymerizable compounds and a metathesis polymerization catalyst system into a mold in which the reactive liquid mixture is metathesis polymerized in bulk to produce the molded article, said metathesis polymerizable compounds comprising:

(a) at least one of metathesis polymerizable monomers, and

(b) at least one of polymers having at least one norbornene-group.

Further, the present invention relates to a molded article produced by metathesis polymerizing, in the presence of metathesis polymerization catalyst system and in a mold, a mixture comprising:

(a) at least one of metathesis polymerizable monomers, and

(b) at least one of polymers having at least one norbornene-group.

The present invention further relates to a multi-part polymerizable composition comprising metathesis polymerizable compounds and a metathesis polymerization catalyst system, in which said metathesis polymerizable compounds comprising at least one of said metathesis polymerizable monomers(a) and at least one of said norbornene- group having polymers(b).

## Detailed Description of the Invention

In the present invention, the metathesis polymerizable monomers(a) are used generally in the amount of 40-99 weight % based on the total weight of the monomers(a) and the polymers(b) having norbornene-group. The monomers(a) are used preferably in the amount of 60-98 weight %, more preferably in the amount of 70-97 weight % based on the total weight of the monomers(a) and the polymers(b).

As the metathesis polymerizable monomers(a), there can be used any of metathesis polymerizable monomers. There are generally used monomers having 1-4 of metathesis polymerizable cycloalkene moieties. Hydrocarbon-monomers having norbornene-moieties in the structure are preferable. Examples of those monomers include dicyclopentadiene, dihydrodicyclopentadiene, cyclopentadiene-methylcyclopentadiene codimer, 5-ethylidenenorbornene, 5-vinylnorbornene, norbornene, 5-cyclohexenylnorbornene, 1,4-methano-1,4,4a,5,6,7,8,8a-octahydronaphthalene, 1,4,5,8-dimethano-1,4,4a,5,6,7,8,8a-octahydronaphthalene, 6-methyl-1,4,5,8-dimethano-1,4,4a,5,7,8,8a-octahydronaphthalene, 6-ethylidene-1,4,5,8-dimethano-1,4,4a,5,7,8,8a-heptahydronaphthalene, tricyclo[8,2,1,0]trideca-5,11-diene, norbornadiene, 5-phenylnorbornene, ethylenebis(5-norbornene) and the like. Among them, there are preferably used dicyclopentadiene and its mixture with other metathesis polymerizable monomers containing at least 50 mole % of dicyclopentadiene.

As the metathesis polymerizable monomers(a), if necessary, there may also be used those having at least one of hetero atoms such as oxygen, nitrogen and the like together with the metathesis polymerizable moiety such as norbornene moiety. The hetero atoms contained in the metathesis polymerizable monomers preferably form polar groups such as ester-, ether-, cyano-, N-substituted imide-group and the like in the monomers.

Those monomers having such polar groups can moderate the metathesis polymerization reaction and can be used as a moderator in the present invention. Further, the use of the polar monomers provides the molded articles with polar character which often makes easy the coating of the molded articles. Some of the polar monomers, further, can increase the compatibility of the monomers(a) with the polymers(b), in other words, can increase the solubility of the polymers(b) in the monomers(a).

Examples of the metathesis polymerizable monomers having polar group include [(5-norbornenyl)-methyl]phenyl ether, bis[(5-norbornenyl)-methyl]ether,5-methoxycarbonylnorbornene, 5-methoxycarbonyl-5-methylnorbornene, 5-[(2-ethylhexyloxy)-carbonyl]norbornene, ethylene-bis(5-norbornenecarboxylate), 5-cyanonorbornene, 6-cyano-1,4,5,8-dimethano-1,4,4a,5,6,7,8,8a-octahydronaphthalene, N-butyl nadic acid imide, 5-(4-pyridyl)norbornene and the like.

In the present invention, metathesis polymerizable monomers having halogen atom may also be used. The halogen-containing monomers provide the molded article with the fire retardancy and increase the softening point of the molded article. Examples of the halogen-containing monomers are 5-chloronorbornene, 5-bromonorbornene, 5,5,6-trichloronorbornene, 5,5,6,6,-tetrachloronorbornene. 5,6-dibromonorbornene, 5-(2,4-dibromophenyl)norbornene and the like.

It is undesirable that metathesis polymerizable monomers have such polar groups as hydroxyl-, carboxyl-, aldehyde-, aliphatic ketone-, amino-, amide-groups and the like that prevent the metathesis polymerization reaction.

It is preferred that all of the above mentioned monomers are free of impurities which inhibit the activity of the metathesis polymerization catalyst system.

In the present invention, the polymers having norbornene-group(b) are used generally in the amount of 1-60 weight % based on the total weight of the monomers(a) and the polymers having norbornene-group(b). The polymers(b) are used preferably in the amount of 2-40 weight %, more preferably 3-30 weight %, based on the total weight of the monomers(a) and the polymers(b). The amount of the polymers having norbornene-group(b) can be varied depending on the kinds of molding processes and the required performance of the molded articles.

The polymers(b) used here are preferably soluble in the metathesis polymerizable monomers(a). Therefore, the addition of the polymers(b) into the metathesis polymerizable mixture usually increases the viscosity of the metathesis polymerizable mixture. The polymers(b) having a high molecular weight often increase more the viscosity of the mixture, and so the amount of the polymers(b) to be added may be varied depending on the molecular weight of the polymers(b) to adjust the viscosity of the mixture to be suitable for the molding process by which the molded articles are produced.

Other elastomers and the like may further be added to the metathesis polymerizable mixture when the addition of the polymers(b) does not provide the metathesis polymerizable mixture with an enough increase of the viscosity to be used in such molding process or when there is required a higher impact strength than that attained by the addition of the polymers(b).

The polymers(b) have preferably a molecular weight of at least 500 and more preferably 1,500-700,000. The polymers(b) may be liquid or solid so long as they are compatible with the metathesis polymerizable monomers(a).

The norbornene-group of the polymers(b) is bonded to either or both of the main chain and side chain of the polymers(b). The polymers(b) have at least one norbornene-group per each molecule of the polymers(b). The polymers(b) have preferably at least two, more preferably at least 3 of norbornene-groups per each molecule of the polymers(b). In other definitions, at least 1%, preferably 3% of recurring units of the polymers(b) contain norbornene moieties.

The polymers(b) may have main chain comprising hydrocarborn. The polymers(b) may have at least one hetero-atom in either or both of the main chain and side chain of the polymers(b). However, the polymers(b) have preferably no polar groups such as carboxyl-, hydroxyl-, aldehyde-, aliphatic keton-, amino-, amide-group and the like that prevent the activity of the metathesis polymerization catalyst system.

The polymers(b) may, for example, be prepared by reacting, under Diels-Alder reaction, (c) at least one of polymers having at least one non-conjugated C-C double bond in either or both of the main chain and side chain, and (d) at least one of cyclopentadiene and dicyclopentadiene.

The polymers(c), which are used for the preparation of the polymers having norbornene-group(b), may be prepared by the addition-polymerization of at least one of monomers having at least two C-C double bonds, such as butadiene, isoprene, chloroprene, pyperylene, allyl acrylate and the like, with or without other addition-polymeriable monomers having one addition-polymerizable group and no norbornene-group, such as ethylene, propylene, butylene, styrene, acrylonitrile, (meth)acrylic acid ester, maleimide and the like.

The polymers(c) prepared by this addition-polymerization may have a main chain comprising hydrocarbon.

When the monomers having at least two C-C double bonds and hetero-atom in the molecule are used, the polymers(c) prepared have hetero-atom in the side chain of the polymers(c).

Examples of the polymers(c), prepared by the addition-polymerization include poly-1,4-butadiene, poly-1,2-butadiene, poly-1,4-isoprene, ethylene-butadiene alternating copolymer, propylene-butadiene alternating copolymer, styrene-butadiene copolymer, butylene-butadiene copolymer, butylene-isoprene copolymer, acrylonitrile-butadiene copolymer, acrylonitrile-styrene-butadiene copolymer, polychloroprene, (meth)acrylic acid ester-butadiene copolymer, maleimide-butadiene copolymer, copolymers of conjugated diene monomer with other addition-polymerizable monomers having hetero-atom, partially halogenated or partially hydrohalogenate conjugated diene polymers, polymer of allyl acrylate and the like. The copolymers of conjugated dienes may be random- or block-copolymers unless otherwise specified. Among them, polymers containing at least 30 mole % of repeating units derived from conjugated diene are preferable, since such polymers have many double bonds to be norbornerized under Diels-Alder reaction, and are generally so highly elastic as to produce the molded article having a high impact strength. Among homopolymers and copolymers of conjugated dienes, polymers(c) prepared by 1,4- addition polymerization of dienes have C-C double bond in the main chain of the polymers(c) and polymers(c) prepared by 1,2-addition polymerization of dienes have C-C double bond in the side chains. There may be freely changed the proportions of cis-structure and trans-structure in the main chain of poly-1,4-conjugated diene polymers such as poly-1,4-butadiene and poly-1,4-isoprene. Concerning styrene-butadiene copolymers, styrene-butadiene random copolymers having a high amount of cis-structure, and styrene-butadiene block copolymers containing up to 10 mole % of repeating units derived from styrene are preferably used in the present invention.

Further, the polymers(c), which are used for the preparation of the polymers having norbornene-group-(b), may be prepared by the ring-opening polymerization of at least one of ring-opening polymerizable monomers having C-C double bond with or without other ring-opening polymerizable monomers having no C-C double bond.

Examples of the ring-opening polymerizable monomers having C-C double bond include cyclic olefins such as cyclopentene, cyclobutene, cyclooctene, cycloocta-1,4-diene, cyclododecene, norbornene and 5-ethylidene norbornene, and unsaturated ethers such as allyl glycidyl ether and the like.

The ring-opening polymerization of cyclic olefines produces polymers(c) comprising hydrocarbon and having C-C double bonds in the main chain of the polymers, which resemble the polymers of conjugated dienes in structure and properties.

The ring-opening polymerization of the unsaturated ethers produces polymers(c) having oxygen atom in the main chain of the polymers and C-C double bond in the side chains.

The polymers(c) may also be prepared by the polycondensation of at least one of polycondensable compounds having C-C double bond with or without other polycondensable monomers having no C-C double bond. For example, unsaturated diols such as 2-butene-1,4-diol, or unsaturated dihalides such as 1,4-dichlorobutene-2 are poly-condensed with dicarboxylic acids or their derivatives to prepare unsaturated polyesters having C-C double bonds and hetero-atoms in the main chain.

As to the polymers(c) having hetero-atoms, it should by avoided to introduce into the polymers(c) any polar groups having an active hydrogen atom such as hydroxyl-, carboxyl-, aldehyde-, aliphatic keton-, amino and amide-groups which prevent the activity of the metathesis polymerization catalyst system. If necessary, the polymers(c) may contain Lewis-base polar groups having no active hydrogen atom, such as nitrile-, ester-, ether-, N-substituted imide-groups and the like, which can form chelate with metals of the metathesis polymerization catalyst system and can moderate the metathesis polymerization reaction.

The polymers(c) are further produced by introducing the norbornene-group into polymers already prepared. For example, there are prepared plymers(c) having C-C double bond in the side chains by the ester exchange reaction between polyacrylate and allyl alcohol.

In the present invention, the polymers(c) prepared as above are then reacted with at least one of cyclopentadiene (called "CP" hereinafter) and dicyclopentadiene (called "DCP" hereinafter) under Diels-Alder reaction to prepare the polymers having norbornene-group(b).

Diels-Alder reaction of the polymers(c) with CP and/or DCP is usually carried out under heat. Under heat, DCP degrades to CP, and conjugated two C-C double bonds of CP react with C-C double bond of the polymers(c) under Diels-Alder reaction to introduce norbornene-group into the polymers. DCP is more preferably used than CP, since DCP is more easily and cheaply available than CP, and since DCP is more stable and produces less amount of undesirable by-products than CP.

Under Diels-Alder reaction, the proportion of CP and/or DCP to the polymers(c) can be changed freely depending on the desired amounts of norbornene-group in the polymers(b) to be prepared, and depending on reaction conditions and the like. Further, the proportion of CP and/or DCP to the polymers(c) can be varied freely depending on whether the norbornene-group having polymers(b) to be prepared under Diels-Alder reaction are used in the form of a crude product or are used after purification. In general, CP and/or DCP are used in the amount of about 0.5-5 equivalents, in terms of CP, relative to moles of C-C double bonds to be norbornerized in the polymers(c).

Diels-Alder reaction of the polymers(c) with CP and/or DCP is generally carried out at about 100-200 °C, preferably at about 140-190 °C, for about 1-30 hours. The reaction is preferably carried out in an autoclave. The pressure in the autoclave is usually maintained at atmospheric pressure below 10 atom and does exceed it, since the composition of the mixture comprising CP and DCP equilibrates depending on the temperature. The autoclave is preferably purged with an inert gas such as nitrogen gas to avoid the oxidation of reactants.

Diels-Alder reaction between CP and/or DCP and the polymers(c) is an equilibrium reaction affected by such factors as the amounts of CP and DCP, the kind and amount of unsaturated bonds of the polymers(c), the reaction temperature and like. At least 1 mole %, usually about 2-100 mole %, preferably about 3-50 mole % of C-C double bond of the polymers(c) is reacted with CP and/or DCP to introduce norbornene-group into the polymers. The amount of norbornene-group in the polymers(b) prepared can be determined by NMR spectroscopic analysis of $CDCl_3$ solution of the purified polymers(b) or by IR.

In the present invention, the polymers having norbornene-group(b) prepared as above can be separated from the resultant mixture and then be metathesis polymerized with at least one of the metathesis

polymerizable monomers(a). Further, in the present invention, the polymers(b) prepared as above can be used in the crude form, i.e. without being separated from the resultant mixture, with the metathesis polymerizable monomers, since DCP and other oligomers of CP such as tricyclopentadiene, which are contained in the resultant mixture, are typical metathesis polymerizable monomers and can effectively be used as the metathesis polymerizable monomers(a). Oligomers such as tricyclopentadiene contained in the resultant mixture are produced when the mixture containing CP and/or DCP is heated at a temperature of at least 140°C. When such oligomers are used as one of the metathesis polymerizable monomers(a), the stiffness and the softening point of the metathesis polymerized polymers increase. However, if the resultant mixture is used as it is, the amount of CP in the resultant mixture should better be as small as possible, since CP affects adversely the metathesis polymerization catalyst system. The amount of CP in the resultant mixture can be reduced by maintaining the mixture at the temperature of about 60°C at a given time, since CP is rather unstable and is converted easily to DCP at the temperature. Since CP has a low boiling point, CP can also be easily distilled or stripped off from the mixture. Both of these two methods can effectively reduce the amount of CP to such an amount that the metathesis polymerization is not prevented.

In the present invention, further, the polymers having norbornene-group(b) can be prepared by polymerizing at least one of monomers having norbornene-group and other polymerizable group, i.e. addition-polymerizable-, ring-opening polymerizable- or polycondensable-group, under such conditions that at least a part of norbornene-groups remains unreacted. That is, in the present invention, the polymers(b) are prepared by the addition-polymerization of at least one of addition-polymerizable monomers having norbornene-group and addition-polymerizable group with or without other addition-polymerizable monomers having no norbornene-group, wherein at least a part of norbornene-group does not participate in the addition-polymerization. In this case, the addition-polymerizable monomers have addition-polymerizable C-C double bond together with norbornene-group. As the addition-polymerizable monomers having norbornene-group, there are preferably used those which are addition-polymerizable under the anion-polymerization, since the cation-polymerization and radical-polymerization often cause the undesirable addition-polymerization of norbornene-group. Examples of the preferred addition-polymerizable monomers having norbornene-group are 5-acryloxymethylnorbornene of the formular

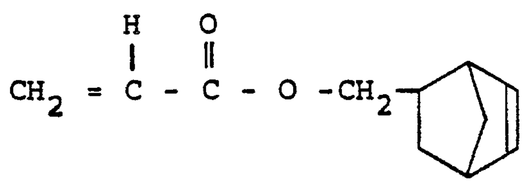

(i)

5-methacryloxymethylnorbornene of the formular

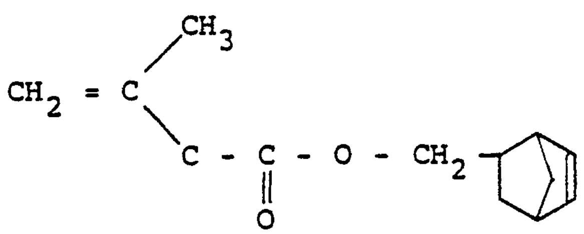

(ii)

5-(styryl) norbornene of the formula

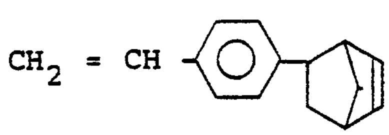

(iii)

N-(5-norbornenyl)methylmaleimide of the formula

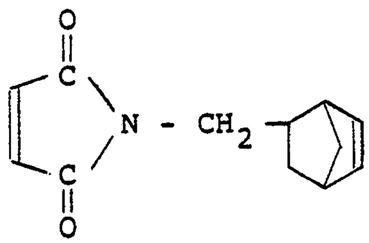

(iv)

Among them, the monomers (i)-(iii) are more preferable.

The addition polymerization of those monomers produces the polymers having hydrocarbon main chain and having norbornene-groups in the side chains. In this addition-polymerization, there can be used other addition-polymerizable monomers having no norbornene-group such as methyl acrylate, methylmethacrylate, acrylate and methacrylate of other higher alkyl and aryl esters such as ethylacrylate, 2-ethylhexylacrylate, acrylonitrile, styrene, α-methyl styrene, butadiene and the like.

The polymers(b) are also prepared by the ring- opening polymerization of at least one of ring-opening polymerizable monomers having norbornene-group with or without other ring-opening polymerizable monomers having no norbornene-group. Examples of ring-opening polymerizable monomers having norbornene-group include ring-opening polymerizable ethers having norbornene-group such as 5-norbornenylglcydilether of the formula

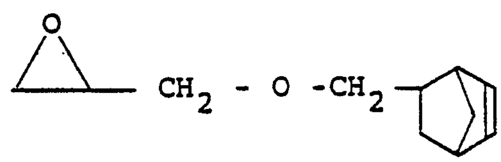

Those ethers can be ring-opening polymerized with other ring-opening polymerizable ethers such as propylene oxide, phenyl glycidyl ether, epichlorohydrin and the like, if neccesary.

The polymers(b) are further prepared by the polycondensation of at least one of polycondensable monomers having norbornene-group with or without other polycondensable monomers having no norbornene-group. The polycondensable monomers have at least two condensable groups together with norbornene-group. The polycondensation of those monomers produces polymers having polar groups in the main chain and having norbornene-group in the main- and /or side-chains. The polar groups in the main chain are preferably those not preventing the activity of the metathesis polymerization catalyst system, such as ester-, ether-, N-substituted imide-groups and the like, more preferably ester -and ether-groups. Thus, the polycondensable monomers are preferably those which form linear polyesters or linear polyethers.

When there are prepared polyesters having norbornene-group by the polycondensation between a dibasic carboxylic acid or its reactive derivative and a diol or its reactive derivative, either or both of the dicarboxylic acid or its derivative and the diol or its derivative have norbornene-group.

Preferred examples of the dicarboxylic acids and their derivatives are nadic acid and its derivatives which are obtained as adducts between maleic acid or its derivatives and cyclopentadiene. A preferred example of the diol is norbornene-5,6-dimethanol.

Polyethers are preferably prepared by the polycondensation between a bis-halide and a dihydric alcohol in the presence of a dehydrohalogenation agent, in which either or both of the bis-halide and dihydric alcohol have norbornene-group. As the bis-halide, for example, 5,6-bis(chloromethyl)norbornene is preferable.

Among polyesters and polyethers, there are preferably used polyesters prepared by the polycondensation between nadic acid or its derivatives and glycols such as ethylene glycol, diethylene glycol, propylene glycol, neopentyl glycol and the like for reasons of easy availability and easy handling.

Those polyesters and polyethers often have terminal carboxyl- and/or alcohol-groups which prevent the metathesis polymerization reaction, and thus the remaining of such groups in the polymers(b) should be avoided.

In the above mentioned addition-polymerization, ring-opening polymerization and polycondensation, the amount of norbornene-group introduced into the polymers can be easily controlled.

Still more, the polymers having norbornene-group(b) can be prepared by the reaction of at least one reactive side-chain-group of polymers(e) with at least one of compounds having norbornene-group. By this

reaction, at least one norbornene-group is introduced into the side chain of the polymers(e). Preferred examples of the polymers(e) include elastomers and relatively flexible polymers such as polyvinyl acetate, polyacrylate, polymethacrylate, ethylene-vinyl acetate copolymer, ethylene-acrylate copolymer, poly-(chloromethylstyrene), chloromethylstyrene-butadiene copolymer, polyepichlorohydrin, ethylene oxide-epichlorohydrin copolymer and the like.

When polyvinyl esters such as homopolymer and copolyemer of vinyl acetate are used as the polymers(e), norbornene-groups are preferably introduced into the polymers(e), for example, by the ester exchange reaction of the polyvinyl esters with carboxylic acid esters having norbornene-group such as 5-methoxycarbonyl norbornene and 5-methyl-5-methoxycarbonyl norbornene.

When homopolymers or copolymers of (meth)acrylate are used, norbornene-groups are preferably introduced into the polymers, for example, by the ester exchange reaction between the homopolymers or copolymers of (meth)acrylate and an alcohol or an ester of an alcohol having norbornene-group such as 5-methylol norbornene and 5-acetoxymethyl norbornene.

When polyepichlorohydrin or poly(chloromethylstyrene) are used, norbornene-groups are introduced into the polymer by the condensation reaction, for example, between polyepichlorohydrin or poly-(chloromethylstyrene) and a monohydric alcohol such as 5-methylol norbornene and 5-(p-hydroxyphenyl)-norbornene and the like.

Among polymers mentioned above, there are preferably used polymers of vinyl acetate or (meth)-acrylate and copolymers of vinyl acetate or (meth)acrylate with ethylene, since a wide variety of these polymers or copolymers are commercially available and the introduction of norbornene-groups into these polymers or copolymers is very easy. In this method wherein the polymers are reacted with a compound having norbornene-group, commercially available polymers can be used as they are, and so the polymers having norbornene-group(b) can be very readily prepared.

In the present invention, there can be produced molded articles having increased impact strength and increased softening point by metathesis polymerizing in a mold a mixture comprising at least one of metathesis polymerizable monomers(a) and at least one of polymers having norbornene- group(b).

When polymers(b) having polar group together with norbornene-group are used in the present invention, these polar polymers(b) have often good affinity for additives such as fillers etc. and can hold the additives firmly in the molded articles.

Further, there can be produced molded articles having various attractive properties depending on the properties of the polymers(b) used in the present invention.

In general, as well known, the metathesis polymerization catalyst system is composed of two components, i.e. a main catalyst component and an activator component. In the practice of bulk polymerization in the presence of the metathesis polymerization catalyst system, the activator component is first added to the reactive mixture and then the principal catalyst component is added to the mixture to initiate polymerization and finally the mixture is molded before solidified to produce a cross-linked molded articles. Alternatively, the principal catalyst component and the activator component can be added to the reactive mixture in reversed order. Further, the principal catalyst component and the activator component are simultaneously added to the reactive mixture immediately before pouring the mixture into the mold.

The metathesis polymerization reaction, however, is an exothermal reaction and proceeds very rapidly. Under such situation, the polymerization often occurs before the mixture is poured into a mold, and it makes the pouring of the mixture into the mold difficult and thus it makes the production of large sized molded articles difficult.

Accordingly, it is desirable to use a method in which the original reactive liquid solutions to be poured into the mold are separated into multi-part reactive solutions, that is, the catalyst and the activator of the metathesis polymerization catalyst system are added to individual liquids to form multi-part reactive solutions, and then the multi-part reactive solutions are mixed rapidly by means of impingement-mixing (the RIM process) or by using a static mixer, and finally the mixture is immediately poured into a mold wherein it is polymerized and molded.

In this method, the multi-part reactive solutions do not need to have the same proportion of monomers-(a) and polymers(b) each other. The proportion of the monomers(a) and the polymers(b) may be changed freely provided that the whole proportion of the monomers(a) and the polymers(b) is kept within the above-mentioned range. That is, the reactive solution containing the activator component may contain larger amount of the polymers(b) than the reactive solution containing the catalyst component or vice versa.

As the catalyst component of the metathesis polymerization catalyst system are used salts such as halides of tungsten, molybdenum, rhenium or tantalium, preferably, tungsten and molybdenum. Particularly preferable are the tungsten compounds. Among tungsten compounds are preferred tungsten halides. tungsten oxyhalides and the like. More particularly, tungsten hexachloride and tungsten oxychloride are

preferred. Organo ammonium tungstate may also be used. However, such tungsten halides and tungsten oxyhalides often initiate the undesirable cationic polymerization immediately when added directly to the mixture of monomers. It is, therefore, preferable that they are previously suspended in an inert solvent such as, for example, benzene, toluene or chlorobenzene and solubilized by the addition of an alcoholic compound or a phenolic compound, and then a chelating agent or a Lewis base is added to the solution containing the tungsten compound in order to prevent undesirable polymerization. Those additives may include acetylacetone, acetoacetic acid, alkyl esters, tetrahydrofuran, benzonitrile and the like. About 1-5 moles of a chelating agent or the Lewis base is preferably used per one mole of the tungsten compound. Under such situations, the reactive solution containing the monomers, the polymers(b), if necessary, and the catalyst component of the metathesis polymerization catalyst system is usually kept stable sufficiently for practical use.

The activator components of the metathesis polymerization catalyst system include organic metal compounds such as alkylated products of metals of Group I - Group III in the Periodic Table, preferably, tetraalkyl tins, alkylaluminum compounds and alkylaluminum halide compounds including diethylaluminum chloride, ethylaluminum dichloride, trioctylaluminum, dioctylaluminum iodide, tetrabutyltin and the like. The activator component is dissolved in a mixture of monomers and the polymers(b), if necessary, to form the other reactive solution.

According to the present invention, in principle the molded articles are produced by mixing said two reactive solutions as already described above. The polymerization reaction, however, starts so rapidly when the above-mentioned composition is used, and so the undesirable initiation of polymerization often accompanied by partial gelling occurs before completion of filling of the mixed solution into the mold. In order to overcome the problem, it is preferable to use a polymerization moderating agent.

As such moderators are generally used Lewis bases, particularly, ethers, esters, nitriles and the like.

Examples of the moderators include ethylbenzoate, butyl ether, diglyme, diethyleneglycoldibutylether, benzonitrile and the like. Such moderators are generally added to the reactive solution containing the activator component.

When a tungsten compound is used as the catalyst component, the ratio of the tungsten compound to the above-mentioned monomers is about 1000:1 - about 15000;1, and preferably about 2000:1 on molar base. When an alkylaluminum compound is used as the activator component, the ratio of the aluminum compound to the above-mentioned monomers is about 100:1 - about 2000:1 and preferably around a ratio of about 200:1 - about 500:1 on molar base. The amount of the masking agent or the moderator may be adjusted by experiments depending upon the amount of the catalyst system.

A variety of additives may be used practically in the present invention to improve or to maintain characteristics of the molded articles. The additives include fillers, reinforcing agents, pigments, antioxidants, light stabilizers, macromolecular modifiers, flame retardants and the like. These additives must be added to the starting solutions, since they cannot be added after the solutions are polymerized to the solid molded polymer.

They may be added to either one or both of multi-part reactive solutions. The additives must be ones being substantially unreactive with the highly reactive catalyst or activator component in the solution to avoid troubles as well as not to inhibit polymerization.

If a reaction between the additive and the catalyst is unavoidable but does not proceed so rapidly, the additives can be mixed with the monomers to prepare a third solution, and the third solution is mixed with the first and/or second solutions of the multi-part solutions immediately before pouring the mixture into a mold. When the additive is a solid filler, a reactive solution containing the filler suspended in it can be used. Instead, the mold can be filled with the filler prior to pouring the reactive solutions into the mold.

The reinforcing agents and fillers can improve flexural modulus of the polymer. They include glass fibers, mica, carbon black, wollastonite and the like. The fillers whose surfaces are treated with silane coupling agent may preferably be used.

The molded articles of the invention may preferably contain an antioxidant. Preferably, a phenol- or amine-antioxidant is added in advance to the polymerizable solution. Examples of the antioxidants include 2,6-t-butyl-p-cresol, N,N′-diphenyl-p-phenylenediamine, tetrakis-[methylen(3,5-di-t-butyl-4-hydroxycinnamate)]methane, methylene-4,4′-bis(3,5-di-t-butylphenol) and the like.

The polymer molded articles of the invention may also contain other polymers, which are added to the monomer solution. Among polymers, elastomers are more preferable since they increase the impact strength of the molded articles and they effectively control the viscosity of the solution along with the polymers(b). Examples of the elastomers include styrene-butadiene rubber, polybutadiene, styrene-butadiene-styrene triblock rubber, styrene-isoprene-styrene triblock rubber, polyisoprene, butyl rubber, ethylene-propylene rubber, ethylene-propylene-diene terpolymers, nitrile rubber, polyvinyl acetate,

polyacrylate, ethylene-acrylate copolymer, ethylene-vinyl acetate copolymer and the like.

As described above, the polymer molded articles of the invention are preferably prepared by simultaneous molding with polymerizing, i.e. by RIM process or pre-mix process. In RIM process, two-part reactive solutions containing the catalyst and the activator respectively are rapidly mixed in the mixing head of a RIM instrument and the mixture is poured into a mold wherein it polymerizes and is molded. In RIM process, each part of two-part reactive solutions has preferably the same viscosity.

In pre-mix process, two-part monomer solutions containing the catalyst component and the acitvator component respectively are previously mixed to prepare a pre-mixture and then the pre-mixture is introduced into a mold. In the pre-mix process as well as the RIM process, fillers such as glass fibers may be placed in the mold prior to pouring the reactive mixture.

In both of RIM process and pre-mix process, the mixture can be introduced into the mold under relatively low pressure so that an inexpensive mold is usable. The temperature inside the mold increases rapidly by heat of the polymerization reaction so that the polymerization reaction is completed in a short time. The molded article of the invention can be removed easily from the mold without a releasing agent unlike the polyurethane-RIM process.

The surface of the molded articles of the invention has polarity probably by the oxidized layer formed on the surface so that conventional coatings such as epoxy, polyurethane and the like adhere to the surface well.

The present invention provides a variety of molded articles which include large sized molded articles such as parts of various vehicles including automobiles, motorbikes, motorboats, snowmobiles, etc. and housing of electric and electronic instruments and the like.

As mentioned above, the molded articles produced by the present invention have a very high softening point, an increased heat resistant and an increased impact strength, and are practically usable in many fields.

The present invention described herein is illustrated by the following examples. These examples do not limit the invention.

Examples 1-7

[Preparation of polymers having norbornene-group]

(Purification of DCP)

Commercially available dicyclopentadiene (DCP) was purified by distillation under nitrogen and reduced pressure to produce purified DCP with a freezing point of 33.4°C. The purity was determined by gaschromatography to be not less than 99%.

(Preparation of polymers having norbornene-group)

Polymers having C-C double bonds shown in Table 1 below and purified DCP were charged into an autoclave in the amount shown in Table 1. After purging with nitrogen, the mixture comprising the polymers and DCP in the autoclave was stirred for 12 hours under heating at 60°C. Then, the mixture was reacted at 170°C using the heating hours shown in Table 1 to prepare the polymers having norbornene-group. After cooling, the crude product in the autoclave was discharged from the autoclave and was stored as it is without separating the polymers having norbornene-group.

The content of norbornene-group in the polymers was determined by measuring the amount of hydrogen bonded to C-C double bond of the polymers under using a $CDCl_3$ solution of the polymers having norbornene-group by NMR spectroscopy, wherein the polymers having norbornene-group were separated from the crude product by dissolving the crude product in toluene and then by precipitating the polymers

from the toluene solution by the addition of methanol.

The contents of tricyclopentadiene in the crude product were determined by measuring the toluene and methanol solution, used to precipitate the polymers from the reaction mixture in the above determination by NMR spectroscopy, with gas-chromatography.

Table 1

| Ex. No. | Kind of polymer having C-C double bond | Trade Name of polymer | Mooney-viscosity | Concentration of polymer when reacted (%) | Reaction conditions Temp. (°C) | Reaction conditions Time (hrs.) | Content of norbornene-group* (%) | Content of tricyclo-pentadiene (wt%) |
|---|---|---|---|---|---|---|---|---|
| 1 | poly-1,4-cis-isoprene | LIR-50*2 | *3 | 50 | 170 | 5 | 7 | 4 |
| 2 | poly-1,4-cis-isoprene | IR-2200*4 | 82 | 50 | 170 | 5 | 7.5 | 20 |
| 3 | poly-1,4-cis-butadiene | BR-11*5 | 42 | 25 | 170 | 2 | 8 | 5 |
| 4 | ditto | ditto | ditto | 12.5 | 170 | 8 | 47 | 18 |
| 5 | ditto | ditto | ditto | 12.5 | 170 | 12 | 16 | 8 |
| 6 | ditto | ditto | ditto | 50 | 170 | 5 | 9 | 4 |
| 7 | styrene-butadiene rubber containing 5% of styrene | Stercon 720* | 35 | 50 | 170 | 5 | 15 | 19 |

*1: Calculated as a ratio of the C-C double bonds in the norbornene ring to total C-C double bonds contained in the polymers. Contents of C-C double bonds in the norbornene ring and those of total C-C double bonds in the polymers are both measured by NMR as explained before.
*2: Kuraray Co.
*3 Liquid rubber having an average molecular weight of about 50,000
*4 & 5: Japan Synthetic Rubber Co.
*6: Firestone Corp.

Examples 8-13 and Comparative Examples 1-2

[Production of molded articles]

(Preparation of solutions containing the catalyst component)

20 g of tungsten hexachloride was added to 70 ml of anhydrous toluene under nitrogen and then a solution consisting of 21 g of nonylphenol and 16 ml of toluene was added to prepare a catalyst solution containing 0.5 M tungsten in terms of the metal content. The solution was purged with nitrogen overnight to remove hydrogen chloride gas formed by the reaction of tungsten hexachloride with nonylphenol. The resulting solution was used as a catalyst solution for the metathesis polymerization.

With 10 ml of the above catalyst solution were mixed 1.0 ml of acetylacetone and 500 ml of each of mixtures comprising DCP and each of the polymers having norbornene-group prepared in the above Examples 1-5 and 7 in the amount shown in Table 2 below to prepare the first reactive solution (Solution A) containing 0.001 M tungsten in terms of the metal content.

(Preparation of solutions containing the activator component)

Trioctylaluminum, dioctylaluminum iodide and diglyme were mixed in the molar ratio of 85:15:100 to prepare an activator solution. The activator solution was mixed with 500 ml of each of mixtures comprising DCP and each of the polymers having norbornene-group prepared in the above Examples 1-5 and 7 in the amount shown in Table 2 to prepare the second reactive solution (Solution B) containing 0.003 M aluminum in terms of the metal content.

(Production of molded articles)

Each of 10 ml of Solution A and 10 ml of Solution B was introduced into two syringes purged with nitrogen respectively. Solutions A and B in each syringe were rapidly introduced into a glass-flask equipped with a stirrer and were mixed rapidly. Then, the stirrer was removed and a thermocouple was inserted to measure the time when the temperature of the reaction mixtures reached at 100 °C after the introduction from the syringes (called "polymerization time" hereinafter).

There was produced each of cross-linked molded article, and is was cut into test pieces. The softening point of each test piece was measured according to TMA method.

Results are shown in Table 2 below.

Table 2

| | Example No. | | | | | | Compar. Example No. | |
|---|---|---|---|---|---|---|---|---|
| | 8 | 9 | 10 | 11 | 12 | 13 | 1 | 2 |
| Composition of reactive solution | | | | | | | | |
| Kind of polymer used | Ex. 1 | Ex. 2 | Ex. 3 | Ex. 4 | Ex. 5 | Ex. 7 | BR-11 | Stercon 702 |
| Concentration of polymer (wt%) | 30 | 2.4 | 3.5 | 5.0 | 3.8 | 6.2 | 3.2 | 6.0 |
| Concentration of tricyclopentadiene (wt%) | 2.4 | 0.9 | 0.6 | 4.6 | 2.0 | 2.2 | 0.3 | 0.3 |
| Polymerization time (sec.) | 40 | 40 | 41 | 40 | 42 | 39 | 38 | 39 |
| TMA softening point (°C) | 149 | 142 | 135 | 155 | 137 | 98 | 112 | 92 |

Table 2 shows that the reactive mixture containing the polymer having norbornene-group, which increase the impact strength of the molded articles, with DCP can also provide the molded articles with more largely increased softening point than the molded articles in which the polymer having norbornene-group was not added. Further, Table 2 shows that the addition of the polymers having norbornene-group

does not prevent the activity of the metathesis polymerization catalyst system.

Example 14

[Preparation of a molded article]

There was charged into an autoclave a mixture comprising cyclopentadiene(CP) prepared by heat degradation of DCP and poly-1,4-cis-butadiene ("BR-11"; Japan Synthetic Rubber Corporation) in the weight ratio of 4:1. The mixture was reacted at 150° C for 3 hours in the autoclave. The resultant mixture was discharged from the autoclave and dissolved in toluene. Methanol was added to the solution to precipitate the polymers having norbornene-group. The precipitate of the polymer having norbornene-group was separated by filtration and dried at 25-50° C under nitrogen stream to remove methanol.

The polymer had 5 mol % of norbornene-group based on the total recurring units when measured by NMR spectroscopy according to the same method in Examples 1-7.

This purified polymer having norbornene-group was dissolved in DCP to prepare a solution containing 3.5 weight % of the polymer.

There was prepared each of Solution A and Solution B according to the similar manners to Examples 8-13 with using the same catalyst solution and the same activator solution as used in Examples 8-13.

A molded article was produced according to the same procedures as Examples 8-13 from Solution A and Solution B. A cross-linked molded article having TMA softening point of 128° C. The comparison of this Example 14 to the above mentioned Comparative Example 1 shows that the use of the polymer having norbornene-group with DCP increases the softening point of the molded article.

Example 15

[Preparation of a molded article]

There was charged into an autoclave a mixture comprising dicyclopentadiene (DCP) and liquid poly-1,4-cis-butadiene ("Sumika Oil", mean molecular weight 1500; Sumitomo Chemical Corporation) in the weight ratio of 1:1. The mixture was reacted at 150° C for 12 hours in the autoclave. Unreacted DCP was not separated from the resultant mixture by distillation. This shows that almost all of DCP was reacted with polybutadiene, and this was identified by IR spectroscopic analysis. When the infrared absorption spectra of the starting liquid poly-1,4-cis-butadiene were compared with those of the polymer reacted with cyclopentadiene, apparent differences were observed. Especially, the increase of the transmission at 730 $cm^{-1}$ shows that most of DCP was reacted with poly-1,4-cis-butadiene to introduce norbornene-group into the polymer.

The resultant product was discharged from the autoclave. A mixture comprising 90 weight % of DCP and 10 weight % of the resultant product was prepared.

There was prepared each of Solution A and Solution B according to the similar manners to Examples 8-13 using the same catalyst solution and the same activator solution as used in Examples 8-13 and using the mixture comprising DCP and the resultant product comprising the polymer having norbornene-group.

A molded article was produced according to the same procedures as Examples 8-13 from Solution A and Solution B. The initial temperature when mixed was 35° C and the plymerization time reaching 100° C was 30 seconds.

There was produced a cross-linked molded article having TMA softening point of 128° C and having degree of swelling measured in toluene at 25° C of 1.60.

These results show that the use of the polymer having norbornene-group with DCP increases the softening point of the molded article.

Examples 16-18 amd Comparative Example 3

[Preparation of a polymer having norbornene-group]

58 g of allyl alcohol and 66 g of cyclopentadiene were charged into an autoclave and reacted at 180 °C for 8 hours under Diels-Alder reaction to prepare 72 g of 5-(hydroxymethyl)norbornene.

62 g of 5-(hydroxymethyl)norbornene prepared and 54 g of methacryloxy chloride were reacted at 50 °C for 8 hours to yield 146 g of 5-(methacryloxymethyl)norbornene (called "MNN" hereinafter).

60 g of MNN purified by distillation was mixed with 300 g of anhydrous toluene to prepare a solution. To the solution, there was added 10 g of butyl lithium solution containing 1.64 mole of butyl lithium per 1 l. of hexane under purging nitrogen, and then the resultant mixture was reacted at 75 °C for 24 hours to polymerize MNN. Then, 50 g of methanol was added to deactivate the anionic terminal groups.

Resultant poly[(5-norbornenyl)methylmethacrylate] (called "PMNN" hereinafter) was separated by adding toluene to redissolve the resultant polymer followed by precipitation with using methanol, and then washed with methanol. This PMNN had an intrinsic viscosity (7 inh) of 0.46 dl/g when determined as a solution of 0.2 g of PMNN in 100 ml of toluene.

There was prepared (5-norbornenylmethyl)methacrylate-methylmethacrylate copolymer (called "P-MNN/MA" hereinafter) by using the same manners as mentioned above except for using a mixture comprising 33 mole % of MNN and 67 mole % of methylmethacrylate instead of MNN. The copolymer had an intrinsic viscosity of 0.48 dl/g when measured in the same manners as above.

[Preparation of a solution containing catalyst component]

19.80 g (0.05 mole) of highly purified tungsten hexachloride was added to 90 ml of anhydrous toluene under nitrogen. Then, a solution containing 0.925 g of t-butanol dissolved in 5 ml of toluene was added and the resultant solution was stirred for 1 hour. A solution consisting of 11.5 g (0.05 mole) of nonylphenol and 5 ml of toluene was added to the solution. The solution was stirred for 1 hour under purging nitrogen. 10 g of acetylacetone was added to the solution, and the resultant solution was further purged with nitrogen overnight to remove hydrogen chloride gas formed. Finally, toluene was added to the solution to prepare a solution containing 0.05 M tungsten in terms of the metal content.

[Preparation of a solution containing activator component]

5.70 g of di-n-octylaluminum iodide, 31.17 g of tri-n-octylaluminum iodide and 13.42 g of diglyme were mixed under purging nitrogen. Then, DCP was added to the mixture to prepare 100 ml of the activator solution containing 1.0 M of aluminum in terms of the metal content.

[Preparation of metathesis polymerizable reactive solutions]

Commercially available dicyclopentadiene (DCP) was purified by distillation under nitrogen and reduced pressure to produce purified DCP with a freezing point of 33.4 °C. The purity was determined by gas-chromatography to be not less than 99 %.

There were mixed purified DCP, either PMNN or P-MNN/MA and either the solution containing catalyst component or the solution containing activator component in the amounts shown in Table 3 below to prepare each of the first reactive solutions (Solution A) containing 0.001 M tungsten in terms of the metal content and to prepare each of the second reactive solutions (Solution B) containing 0.003 M aluminum in terms of the metal content.

[Production of molded articles]

Each of 10 ml of Solution A and 10 ml of Solution B was introduced into two syringes purged with nitrogen respectively. The solutions in each syringe were rapidly introduced into a glass-flask equipped with a stirrer and were mixed rapidly. Then, the stirrer was removed and a thermocouple was inserted to

measure "polymerization time".

There was produced each of cross-linked molded article, and it was cut into test pieces. The softening point of each test piece was measured according to TMA method.

Results are shown in Table 3 below.

Table 3

| Composition of reactive solution | Example No. 16 | Example No. 17 | Example No. 18 | Compar. Example No. 3 |
|---|---|---|---|---|
| Kind of polymer | PMNN | PMNN | P-MNN/MA | - |
| Content of norbornene-group*1 (mole%) | 100 | 100 | 33 | - |
| Content of polymer*2 (wt%) | 20 | 10 | 10 | - |
| Content of DCP*3 (wt%) | 80 | 90 | 90 | 100 |
| (Solution A) Content of tungsten (M) | 0.001 | 0.001 | 0.001 | 0.001 |
| (Solution B) Content of aluminum (M) | 0.003 | 0.003 | 0.003 | 0.003 |
| Initial temp. when mixed (°C) | 32 | 32 | 32 | 32 |
| Polymerization time reaching 100°C (sec.) | 63 | 31 | 30 | 25 |
| TMA softening point (°C) | 149 | 147 | 122 | 92 |

*1: Content of repeating units having norbornene-group based on total repeating units of polymer

*2: Content of the polymer based on the total weight of the polymer and DCP

*3: Content of DCP based on the total weight of the polymer and DCP

Table 3 shows that the reactive mixture comprising the polymer having norbornene-group and DCP

provides the molded articles with more largely increased softening point and more increased impact strength than the reaction mixture in which the polymer having norbornene-group was not added. Further, Table 3 shows that the addition of the polymers having norbornene-group does not prevent the activity of the metathesis polymerization catalyst system.

Examples 19-26 and Comparative Examples 4-8.

[Preparation of polymers having norbornene-group]

160 g of commercially available ethylene-vinyl acetate copolymer having molar ratio of 57 : 43 (SOALEX R-DH ; Nihon Gosei Kagaku Corporation) (called "EV-1" hereinafter) was dissolved in 180 g of toluene. Then, 198 g of 5-(methoxycarbonyl)norbornene and 1 g of t-butyl titanate ester-exchange catalyst were added to the solution, and the mixture obtained was heated at 150° C for 9 hours to prepare a ethylene-vinyl acetate copolymer in which 26 mole % of acetate ester group of the copolymer was ester-exchanged with 5-(methoxycarbonyl)norbornene (called "NEV-1" hereinafter).

160 g of commercially available ethylene-vinyl acetate copolymer having molar ratio of 76 : 24 (EVAPREN 500 ; Bayer A.G.) (called "EV-2" hereinafter) was dissolved in 260 g of toluene. Then, 141 g of 5-(methoxycarbonyl)norbornene and 1 g of t-butyl titanate ester-exchange catalyst were added to the solution and the mixture obtained was heated at 150° C for 9 hours to prepare a ethylene-vinyl acetate copolymer in which 20 mole % of acetate ester group of the copolymer was ester-exchanged with 5-(methoxycarbonyl)norbornene (called "NEV-2" hereinafter).

160 g of commercially available ethylene-vinyl acetate copolymer having molar ratio of 89 : 11 (EVAFLEX 210 ; Mitsui-Du Pont Chemical Corporation) (called "EV-3" hereinafter) was dissolved in 980 g of toluene. Then, 79 g of 5-(methoxycarbonyl)norbornene and 1 g of t-butyl titanate ester interchange catalyst were added to the solution, and the mixture obtained was heated at 150 °C for 9 hours to prepare a ethylene-vinyl acetate copolymer in which 34 mole % of acetate ester group of the copolymer was ester-exchanged with 5-(methoxycarbonyl)norbornene (called "NEV-3" hereinafter).

160 g of commercially available ethylene-ethylacrylate copolymer having molar ratio of 92 : 8 (EVAFLEX-EEA A-704 ; Mitsui-Du Pont Chemical Corporation) (called "EA-1" hereinafter) was dissolved in 980 g toluene. Then, 61 g of 5-(acetoxymethyl)norbornene and 1 g of t-butyl titanate ester-exchange catalyst were added to the solution, and the mixture obtained was heated at 150° C for 9 hours to prepare a ethylene-ethylacrylate copolymer in which 38 mole % of acrylic acid ester group of the copolymer was ester-exchanged with 5-(acetoxymethyl)norbornene (called "NEA-1" hereinafter).

160 g of commercially available ethylene-ethylacrylate copolymer having molar ratio of 87 :" 13 (EVAFLEX-EEA A-709 ' Mitsui-Du Pont Chemical Corporation) (called "EA-2" hereinafter) was dissolved in 580 g of toluene. Then, 85 g of 5-(acetoxymethyl)norbornene and 1 g of t-butyl titanate ester-exchange catalyst were added to the solution, and the mixture obtained was heated at 150° C for 9 hours to prepare a ethylene-ethylacrylate copolymer in which 25 mole % of acrylic acid ester group of the copolymer was ester-exchanged with 5-(acetoxymethyl)norbornene (colled "NEA-2" hereinafter).

In the copolymers having norbornene-group prepared by the above mentioned procedures, the proportions of the ester exchange were determined by the integrated value of olefinic-hydrogen atom in norbornene-moiety and hydrogen atom at $\alpha$-position of ester group.

[Production of molded articles]

According to the similar manners to those used in Example 16-18, there was prepared each of the first reactive solutions (Solution A) containing tungsten catalyst component, the copolymer prepared above, DCP and occasionally other metathesis polymerizable monomer in the amounts shown in Table 4 below.

According to the similar manners to those used in Examples 16-18, there was prepared each of the second reactive solutions (Solution B) containing aluminum activator component, one of the copolymers prepared above, DCP and occasionally other metathesis polymerizable monomer in the amounts shown in Table 4 below.

As shown in Table 4 below, in each Examples, the amounts of tungsten catalyst and aluminum activator and the proportion of aluminum activator to tungsten catalyst were determined so that the polymerization

time reaching to 100° C was as short as possible.

There was produced each of molded articles from Solution A and Solution B according to the same manners as used in Examples 1-13.

Initial temperature when mixed, the polymerization time reaching 100° C and TMA softening point were measured in the same manners as Examples 1-13.

Results are shown in Table 4 below.

Table 4

| Composition of reactive solution | Ex. 19 | Compar. Ex. 4 | Ex. 20 | Ex. 21 | Compar. Ex. 5 | Ex. 22 | Ex. 23 | Compar. Ex. 6 | Ex. 24 | Ex. 25 | Compar. Ex. 7 | Ex. 26 | Compar. Ex. 8 |
|---|---|---|---|---|---|---|---|---|---|---|---|---|---|
| Kind of polymer | NEV-1 | EV-1 | NEV-1 | NEV-2 | EV-2 | NEV-2 | NEV-3 | EV-3 | NEV-3 | NEA-1 | EA-1 | NEA-2 | EA-2 |
| Content of norbornene -group*1 (mole%) | 11 | - | 11 | 5 | - | 5 | 3.7 | - | 3.7 | 3 | - | 3.3 | - |
| Content of the polymer*2 (wt%) | 10 | 10 | 10 | 10 | 10 | 15 | 10 | 10 | 5 | 10 | 10 | 10 | 10 |
| Content of DCP*3 (wt%) | 90 | 90 | 85 | 90 | 90 | 85 | 90 | 90 | 90 | 90 | 90 | 90 | 90 |
| Other monomer | - | - | ethylidene norbornene | - | - | - | - | - | vinyl norbornene | - | - | - | - |
| Content of other monomer*4 | - | - | 5 | - | - | - | - | - | 5 | - | - | - | - |
| (Solution A) Content of tungsten (M) | 0.001 | 0.001 | 0.001 | 0.001 | 0.001 | 0.001 | 0.001 | 0.001 | 0.001 | 0.001 | 0.001 | 0.001 | 0.001 |
| (Solution B) Content of aluminum (M) | 0.003 | 0.010 | 0.003 | 0.0033 | 0.0075 | 0.003 | 0.0038 | 0.005 | 0.0038 | 0.003 | 0.003 | 0.0038 | 0.0038 |
| Initial temp. when mixed (°C) | 32 | 32 | 32 | 32 | 32 | 32 | 32 | 32 | 32 | 32 | 32 | 32 | 32 |
| Polymerization time reaching 100°C (sec.) | 62 | no polymerization occur | 59 | 64 | 104 | 69 | 43 | 67 | 39 | 43 | 69 | 42 | 72 |
| TMA softening point (°C) | 128 | - | 126 | 147 | 125 | 154 | 141 | 130 | 124 | 141 | 135 | 142 | 136 |

*1: Content of repeating units having norbornene-group based on the total repeating units of polymer

*2: Content of the polymer based on the total weight of the polymer and the monomers

*3: Content of DCP based on the total weight of the polymer and the monomers

*4: Content of other monomer based on the total weight of the polymer and the monomers

Table 4 shows that the softening point of the molded articles produced by adding the copolymer having norbornene-group is at least 5°C higher than those produced by adding the copolymer having no norbornene-group.

Examples 27-28 and Comparative Example 3

[Preparation of a polymer having norbornene group]

A mixture of 98.4 g of bicyclo[2,2,1]hept-5-ene-2,3-dicarboxylic acid anhydride (nadic anhydride) and 1.5 g of p-toluenesulfonic acid was dissolved in 180 ml of absolute methanol, and the solution was boiled for 10 hours. The resultant dimethyl nadicate (called "NDME" hereinafter) was purified by distillation under a reduced pressure : yield, 106 g (84%) bp. 94°C at 1 mmHg.

21 g of NDME was mixed with 6.2 g of ethyleneglycol and 0.05 g of t-butyl titanate ester-exchange catalyst, and the resultant mixture was heated at 180°C for 6 hours and then at 220°C for 8 hours to prepare the polyester having the repeating unit:

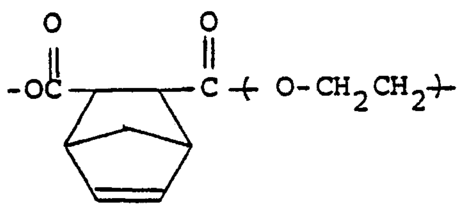

[Production of molded articles]

According to the the similar manners to those used in Examples 16-18, there was prepared each of the first reactive solutions (Solution A) containing tungsten catalyst component, the polyester prepared above and DCP in the amounts shown in Table 5. DCP in the amounts shown in Table 5.

According to the similar manners to those used in Examples 16-18, there was prepared each of the second reactive solutions (Sobution B) containing aluminum activator component, the polyester prepared above and DCP in the amounts shown in Table 5. There was produced each of molded articles from Solution A and Solution B according to the same manners as used in Examples 1-13.

Initial temperature when mixed, the polymerization time reaching 100°C and TMA softening point were measured in the same manners as Examples 1-13.

Results are shown in Table 5 below.

Table 5

| | Ex. 27 | Ex. 28 | Compar. Ex. 3 |
|---|---|---|---|
| Composition of reactive solution | 27 | 27 | 3 |
| Content of polyester (wt%) | 5 | 10 | - |
| Content of DCP (wt%) | 95 | 90 | 100 |
| (Solution A) Content of tungsten (M) | 0.001 | 0.001 | 0.001 |
| (Solution B) Content of aluminum (M) | 0.003 | 0.004 | 0.003 |
| Initial temp. when mixed (°C) | 32 | 32 | 32 |
| Polymerization time reaching 100°C (sec.) | 27 | 29 | 25 |
| TMA softening point (°C) | 119 | 123 | 92 |

Table 5 shows that the reactive mixture comprising the polyester and DCP produces the molded articles having more increased softening point than the molded article in which polyester was not used. Further, Table 5 shows that the addition of the polyester does not prevent the activity of the metathesis polymerization catalyst system.

## Claims

1. A process for producing a molded article by introducing a reactive liquid mixture comprising metathesis polymerizable compounds and a metathesis polymerization catalyst system into a mold in which the reactive liquid mixture is metathesis polymerized in bulk to produce the molded article, said metathesis polymerizable compounds comprising:

(a) at least one of metathesis polymerizable monomers, and

(b) at least one of polymers having at least one norbornene-group.

2. A process of claim 1 in which the polymers(b) have a molecular weight of at least 500.

3. A process of claim 1 or 2 in which the norbornene-group of the polymers(b) is bonded to either or both of the main chain and side chain of the polymers(b).

4. A process of claim 1, 2 or 3 in which the mixture comprises 99-40 weight % of the metathesis polymerizable monomers(a) and 1-60 weight % of the polymers(b) based on the total weight of the metathesis polymerizable monomers(a) and the polymers(b).

5. A process of claim 1 or claims 2 to 4 in which the polymers (b) have a plural of norbornene-groups per each molecule of the polymers(b).

6. A process of claim 1 or claims 2 to 5 in which the polymers (b) have a hydrocarbon main chain.

7. A process of claim 1 or claims 2 to 6 in which the polymers (b) have at least one hetero-atom in either or both of the main chain and side chain of the polymers(b).

8. A process of claim 1 or claims 2 to 7 in which the polymers (b) are those prepared by reacting under Diels-Alder reaction:

(c) at least one of polymers having at least one non-conjugated C-C double bond in either or both of the main chain and side chain, and

(d) at least one of cyclopentadiene and dicyclopentadiene.

9. A process of claim 8 in which the polymers(c) are those prepared by:

(1) the addition-polymerization of at least one of monomers having at least two C-C double bonds with or without other addition-polymerizable monomers, said double bonds being conjugated or different in polymerizability each other,

(2) the ring-opening polymerization of at least one of ring-opening polymerizable monomers having C-C double bond with or without other ring-opening polymerizable monomers having no C-C double bond, or

(3) the polycondensation of at least one of polycondensable monomers having C-C double bond with or without other polycondensable monomers having no C-C double bond.

10. A process of claim 1 or claims 2 to 7 in which the polymers (b) are those prepared by:

(1) the addition-polymerization of at least one of addition-polymerizable monomers having norbornene-group and addition-polymerizable group, wherein at least a part of norbornene-group does not participate in the addition-polymerization, with or without other addition-polymerizable monomers having no norbornene-group,

(2) the ring-opening polymerization of at least one of ring-opening polymerizable monomers having norbornene-group and ring-opening polymerizable moiety, wherein at least a part of norbornene-group does not participate in the ring-opening polymerization, with or without other ring-opening polymerizable monomers having no norbornene-group, or

(3) the polycondensation of at least one of polycondensable monomers having norbornene-group with or without other polycondensable monomers having no norbornene-group.

11. A process of claim 1 or claims 2 to 7 in which the polymers (b) are those prepared by the reaction of side-chain group of at least one of polymers with at least one of compounds having norbornene-groups.

12. A process of claim 1 or claims 2 to 11 in which the metathesis polymerizable cyclic monomer(a) is dicyclopentadiene.

13. A molded article produced by metathesis polymerizing, in the presence of a metathesis polymerization catalyst system and in a mold, a mixture comprising:

(a) at least one of metathesis polymerizable monomers, and

(b) at least one of polymers having at least one norbornene-group, or as produced in accordance with anyone of claims 1 to 12.

14. A multi-part polymerizable composition comprising metathesis polymerizable compounds and a metathesis polymerization catalyst system, said metathesis polymerizable compounds comprising:

(a) at least one of metathesis polymerizable monomers, and

(b) at least one of polymers having at least one norbornene-group.

15. A composition of claim 14 in which the polymers(b) have a molecular weight of at least 500.

16. A composition of claim 14 or 15 in which the norbornene-group of the polymers(b) is bonded to either or both of the main chain and side chain of the polymers(b).

17. A composition of claim 14, 15 or 16 in which the mixture comprises 99-40 weight % of the metathesis polymerizable monomers(a) and 1-60 weight % of the polymers(b) based on the total weight of the metathesis polymerizable monomers(a) and the polymers(b).

18. A composition of claim 14 or claims 15 to 17 in which the polymers (b) have a plural of norbornene-groups per each molecule of the polymers(b).

19. A composition of claim 14 or claims 15 to 18 in which the polymers (b) have hydrocarbon main chain.

20. A composition of claim 14 or claims 15 to 19 in which the polymers (b) have at least one hetero-atom in either or both of the main chain and side chain of the polymers(b).

21. A composition of claim 14 or claims 15 to 20 in which the polymers (b) are those prepared by reacting under Diels-Alder reaction:

(c) at least one of polymers having at least one non-conjugated C-C double bond in either or both of the main chain and side chain, and

(d) at least one of cyclopentadiene and dicyclopentadiene.

22. A composition of claim 21 in which the polymers(c) are those prepared by:

(1) the addition-polymerization of at least one of monomers having at least two C-C double bonds with or without other addition-polymerizable monomers, said double bonds being conjugated or different in polymerizability each other,

(2) the ring-opening polymerization of at least one of ring-opening polymerizable monomers having C-C double bond with or without other ring-opening polymerizable monomers having no C-C double bond, or

(3) the polycondensation of at least one of polycondensable monomers having C-C double bond with or without other polycondensable monomers having no C-C doulbe bond.

23. A composition of claim 14 or claims 15 to 20 in which the polymers (b) are those prepared by:

(1) the addition-polymerization of at least one of addition-polymerizable monomers having norbornene-group and addition-polymerizable group, wherein at least a part of norbornene-group does not participate in the addition-polymerization, with or without other addition-polymerizable monomers having no norbornene-group,

(2) the ring-opening polymerization of at least one of ring-opening polymerizable monomers having norbornene-group and ring-opening polymerizable moiety, wherein at least a part of norbornene-group does not participate in the ring-opening polymerization, with or without other ring-opening polymerizable monomers having no norbornene-group, or

(3) the polycondensation of at least one of polycondensable monomers having norbornene-group with or without other polycondensable monomers having no norbornene-group.

24. A composition of claim 14 or claims 15 to 20 in which the polymers (b) are those prepared by the reaction of side-chain group of at least one of polymers with at least one of compounds having norbornene-groups.

25. A composition of claim 14 or claims 15 to 24 in which the metathesis polymerizable cyclic monomer(a) is dicyclopentadiene.